# FASCICULE DE BREVET EUROPEEN

(11) **EP 2 832 586 B1**
(45) Date de publication et mention de la délivrance du brevet: **10.04.2019**
(21) Numéro de dépôt: 14178053.6
(22) Date de dépôt: 22.07.2014
(51) Int. Cl.: B60Q 1/22, B60Q 5/00, B60Q 9/00

(54) **Feu arrière de véhicule, système et procédé d'aide à la manoeuvre d'un véhicule**
Rücklicht eines Fahrzeugs, Lenkassistenzsystem und -verfahren für Fahrzeug
Vehicle rear light, system and method for manoeuvring assistance of a vehicle

(30) Priorité: 31.07.2013 FR 1357563
(43) Date de publication de la demande: 04.02.2015
(73) Titulaire: Vignal Systems, 69960 Corbas (FR)
(72) Inventeur: Dupuis, Guillaume, 42530 St Genest Lerpt (FR)
(74) Mandataire: Delorme, Nicolas

(56) Documents cités:
- DE-A1- 19 831 262
- FR-A1- 2 635 304
- FR-A1- 2 959 972
- GB-A- 2 306 634
- US-A- 5 162 794
- US-A- 5 760 708
- US-A1- 2002 180 595
- US-A1- 2010 060 439

## Description

La présente invention concerne un feu arrière de véhicule, un dispositif de signalisation du recul d'un véhicule, un système d'aide à la manoeuvre d'un véhicule, et un véhicule équipé d'un tel système d'aide à la manoeuvre. L'invention concerne également un procédé d'aide à la manoeuvre d'un véhicule.

Certains véhicules, en particulier les véhicules lourds tels que les camions, sont équipés d'une alarme sonore de recul qui, en complément du feu de recul, permet d'avertir les autres usagers et/ou les piétons lorsque le véhicule va ou est en train d'effectuer une manoeuvre en marche arrière. Cette alarme sonore de recul peut typiquement être associée au boîtier d'un feu arrière de recul dans lequel est disposé le feu de recul.

Cependant, l'alarme sonore de recul d'un véhicule lourd émet généralement des sons à intervalles réguliers. Ainsi, l'information perceptible par un piéton, par exemple, est uniquement que le véhicule recule, sans indication plus précise, notamment sur la proximité du véhicule.

Il peut par ailleurs être prévu à l'arrière de certains véhicules un capteur de distance apte à mesurer la distance d le séparant d'un élément environnant, par exemple une personne ou un objet. Dans ce cas, le fonctionnement de l'alarme sonore de recul peut être piloté en fonction de cette distance d. Typiquement, l'alarme peut émettre un son répété selon une fréquence qui est d'autant plus importante que la distance d est faible. Ainsi, le rapprochement dans le temps des sons émis par l'alarme peut indiquer que le véhicule se rapproche d'un élément environnant.

La fréquence des sons émis par l'alarme constitue donc une information utile pour le conducteur du véhicule, pour l'aider à manoeuvrer le véhicule. De façon plus générale, on peut prévoir à l'arrière du véhicule un capteur de distance, que le feu arrière inclue ou non une alarme sonore de recul, et que celle-ci émette des sons à intervalles réguliers ou de façon pilotée en fonction de la distance d. Dans ce cas, c'est plus directement l'information de distance mesurée par le capteur de distance qui constitue une information utile pour le conducteur du véhicule, pour l'aider à manoeuvrer le véhicule.

Toutefois, dans les véhicules lourds, il n'est pas prévu de système permettant de remonter cette information de distance au conducteur - qu'il s'agisse de l'information provenant du capteur de distance, ou d'une fréquence des sons émise par l'alarme sonore de recul représentant cette information de distance. Il s'ensuit que cette information reste localisée au voisinage de l'arrière du véhicule, et ne peut donc être utile au conducteur. Plus précisément, dans le cas où une alarme est présente, cette information ne peut donc être utile qu'aux autres usagers ou aux piétons.

En outre, les systèmes mis en oeuvre sur les voitures pour remonter cette information au conducteur impliquent l'implantation d'un câble dédié connecté au système de gestion du véhicule. Mais cette solution ne peut être mise en oeuvre sur un véhicule lourd sans impliquer des contraintes de réalisation et de coûts significatives, du fait des longueurs de câbles qu'il faudrait utiliser entre l'arrière du véhicule, où se situent le feu de recul et le radar, et l'avant du véhicule, où se situe le système de gestion du véhicule. D'autres systèmes pour remonter cette information au conducteur sont basés sur des technologies sans fil qui ne sont pas utilisables de façon fiable sur un véhicule lourd, du fait de la distance relativement importante entre l'avant et l'arrière du véhicule et des perturbations subies par le signal.

Les documents US 2002/0180595 en accord avec les préambules respectifs des revendications 1 et 9, FR 2 959 972 et US 5 162 794 décrivent des systèmes d'avertissement pour un véhicule, utilisés lorsque le véhicule recule.

La présente invention vise à remédier aux inconvénients mentionnés ci-dessus.

A cet effet, et selon un premier aspect, l'invention concerne un feu arrière de véhicule, comprenant :
- une pluralité de sources lumineuses disposées dans un boîtier, parmi lesquelles un feu de recul ;
- un circuit électrique d'alimentation des sources lumineuses comprenant :
   - N premiers conducteurs dédiés chacun à l'une des sources lumineuses, dont un premier conducteur dédié au feu de recul ;
   - et un deuxième conducteur, qui constitue un conducteur de masse.

Selon une définition générale de l'invention, le feu arrière comprend en outre :
- une unité de commande logée dans le boîtier ;
- des moyens de détection, par l'unité de commande, de l'activation du feu de recul ;
- des premiers moyens de liaison agencés pour permettre à l'unité de commande de recevoir, depuis un capteur de distance, une donnée de distance d ;
- un dispositif d'indication connecté à l'unité de commande par des troisièmes moyens de liaison qui sont agencés pour permettre à l'unité de commande d'activer ou de désactiver le dispositif d'indication, le dispositif d'indication, lorsqu'il est activé, étant apte à modifier au moins un paramètre du courant dans l'un des N premiers conducteurs.

En pratique, la donnée de distance correspond à la distance séparant le capteur d'un élément environnant, tel qu'une personne ou un objet.

Typiquement le dispositif d'indication est activé / désactivé en fonction de la donnée de distance reçue par l'unité de commande, via les premiers moyens de liaison. Le paramètre en question peut par exemple concerner l'amplitude du courant dans le premier conducteur.

Or, chacun des N premiers conducteurs est relié à un câble du faisceau du véhicule, qui est un composant présent sur les véhicules lourds pour relier le système de gestion du véhicule, généralement situé à l'avant du véhicule, aux différentes sources lumineuses et notamment celles contenues du feu arrière. En conséquence, la modification d'un paramètre du courant dans l'un des N premiers conducteurs se répercute dans le câble correspondant du faisceau et peut donc être détectée au niveau du système de gestion du véhicule.

L'invention permet ainsi de tirer parti de composants existants sur le camion pour remonter en cabine l'information de distance mesurée par le capteur, à l'arrière du véhicule. Il suffit pour cela de remplacer un feu traditionnel par un feu selon l'invention, doté d'une unité de commande et d'un dispositif d'indication.

Il en découle une amélioration de la conduite du véhicule, qui peut être manoeuvré de façon plus simple et plus sûre, sans pour cela impliquer des coûts importants liés à des modifications de la structure du véhicule.

Le dispositif d'indication peut comprendre une branche électrique disposée entre le premier conducteur et le conducteur de masse, ladite branche électrique comportant un interrupteur et un composant apte à dissiper de la puissance, tel qu'une résistance, les troisièmes moyens de liaison connectant l'unité de commande à l'interrupteur. Dans le cas où le premier conducteur en question est celui dédié au feu de recul, ladite branche électrique est disposée en parallèle du feu de recul.

Ainsi, l'activation, respectivement la désactivation du disposition d'indication correspond, en pratique, à la fermeture, respectivement l'ouverture, de l'interrupteur. Le fait de fermer l'interrupteur conduit à l'augmentation de l'intensité du courant dans le premier conducteur ce qui, selon l'invention, permet de refléter la variation de la distance d.

En outre, le feu arrière peut comprendre une alarme sonore de recul associée au boîtier. De plus, mais de façon optionnelle, on peut prévoir que le feu comprenne des seconds moyens de liaison connectant l'unité de commande et l'alarme sonore de recul, agencés pour permettre à l'unité de commande de commander l'alarme sonore de recul en fonction de ladite donnée de distance d.

Ainsi, l'unité de commande peut commander l'alarme sonore de recul de sorte que le son émis par cette alarme, typiquement la fréquence de ces sons, varie selon la distance d.

En prévoyant d'intégrer dans un feu arrière de véhicule une unité de commande, l'invention permet de fournir un feu arrière autonome et doté de son propre système de gestion. L'invention permet ainsi de s'affranchir, pour la gestion de l'alarme sonore de recul, du système de gestion global du véhicule. L'architecture globale du véhicule équipé d'un tel feu arrière peut donc être sensiblement inchangée. L'apport de la fonction supplémentaire, à savoir la variation du son émis par l'alarme sonore de recul en fonction de la distance, peut ainsi être obtenu par le simple remplacement d'un feu arrière de l'art antérieur par un feu arrière selon l'invention.

On peut également prévoir que la commande de l'alarme sonore par l'unité de commande inclue la mise en marche ou l'arrêt de l'alarme, et/ou la variation de l'intensité acoustique du son émis par l'alarme, par exemple sur commande du conducteur.

Les premiers moyens de liaison peuvent en outre être agencés pour permettre à l'unité de commande d'activer le capteur de distance, c'est-à-dire d'activer la prise de mesure de ladite donnée de distance. Ce capteur de distance, qui n'est pas nécessairement unique, peut par exemple comporter un radar. On peut prévoir par exemple entre 1 et 10 capteurs de distance, de préférence entre 1 et 6 capteurs de distance. Il est à noter que les moyens de liaison peuvent comporter des liaisons filaires ou sans fil.

Selon un deuxième aspect, l'invention concerne un dispositif de signalisation du recul d'un véhicule qui comprend un feu arrière tel que précédemment décrit, et au moins un capteur de distance connecté à l'unité de commande, le capteur de distance étant apte à déterminer la distance d le séparant d'un élément environnant. Le capteur envoyant la donnée de distance à l'unité de commande, cette dernière peut commander l'alarme en fonction de cette donnée, lorsque l'alarme est présente.

Ce dispositif peut permettre de signaler le recul du véhicule, et d'informer de la distance d entre le capteur et un élément environnant, et ce à la fois pour un piéton et pour le conducteur du véhicule.

Selon un troisième aspect, l'invention concerne un système d'aide à la manoeuvre d'un véhicule, qui comprend :
- un feu arrière tel que précédemment décrit ;
- au moins un capteur de distance connecté à l'unité de commande, le capteur de distance étant apte à déterminer la distance d le séparant d'un élément environnant ;
- un système de gestion du véhicule relié au feu arrière par un faisceau de câbles incluant N premiers câbles connectés chacun à un premier conducteur associé à une source lumineuse du feu arrière, dont un premier câble connecté au premier conducteur dédié au feu de recul, et un deuxième câble, constituant un câble de masse, connecté au deuxième conducteur, le système de gestion comportant un dispositif de détection apte à détecter ledit au moins un paramètre du courant dans l'un des N premiers conducteurs, via le premier câble correspondant. Ledit premier conducteur peut être celui dédié au feu de recul.

Le dispositif de détection, qui peut être un dispositif présent dans un véhicule connu, peut être utilisé pour vérifier le fonctionnement normal du feu de recul, en surveillant un paramètre du courant dans le premier conducteur. Lorsque le dispositif d'indication est activé, le dispositif de détection détecte la modification du paramètre. Dans la mesure où l'activation du dispositif d'indication est effectuée en fonction de la distance d déterminée par le capteur, la modification du paramètre permet de communiquer la donnée de distance au dispositif de détection du système de gestion.

Ainsi, l'invention permet au système de gestion du véhicule d'avoir accès à la donnée de distance, sans qu'il soit pour cela nécessaire de prévoir un câble supplémentaire, dédié, typiquement dans le faisceau du véhicule.

En d'autres termes, on peut prévoir que le faisceau soit dépourvu de câble supplémentaire destiné à transmettre au système de gestion une information représentative de la distance d.

On peut de plus prévoir qu'il n'existe pas de lien entre le système de gestion et le capteur de distance qui soit destiné à transmettre au système de gestion une information représentative de la distance d.

Le système d'aide à la manoeuvre peut en outre comprendre une interface reliée au système de gestion, apte à fournir une information représentative de la distance d et perceptible par un conducteur du véhicule. Cette information peut être auditive et/ou visuelle, par exemple sous la forme d'un indicateur sonore et/ou affichée sur un écran situé dans la cabine du véhicule.

Selon un quatrième aspect, l'invention concerne un véhicule, en particulier un véhicule lourd tel qu'un camion tracteur ou porteur, qui comprend (i) à l'avant, une partie motrice comportant une cabine et (ii) à l'arrière, un conteneur destiné à recevoir des marchandises. Selon l'invention, ce véhicule comprend en outre un système d'aide à la manoeuvre tel que précédemment décrit, le feu arrière et au moins un capteur de distance étant montés à l'arrière du conteneur, le système de gestion et l'interface, lorsqu'elle est présente, étant situés dans la partie motrice.

Il est à noter que la partie motrice et le conteneur peuvent être des pièces séparées mais connectées mécaniquement et électriquement (comme dans le cas d'un tracteur où on attèle une semi-remorque à la partie motrice comprenant la cabine et un châssis), ou faire partie d'un même ensemble (comme dans le cas d'un porteur ayant un châssis commun pour la cabine et le conteneur).

Selon un cinquième aspect, l'invention concerne un procédé d'aide à la manoeuvre d'un véhicule par un conducteur, le véhicule comprenant un feu arrière comportant une pluralité de sources lumineuses parmi lesquelles un feu de recul. Selon une définition générale, le procédé comprend les étapes consistant à :
α) recevoir, dans une unité de commande agencée dans le feu arrière, une donnée de distance depuis un capteur de distance ;
β) commander, par l'unité de commande et en fonction de la donnée de distance, la modification d'au moins un paramètre du courant dans un premier conducteur d'alimentation de l'une des sources lumineuses du feu arrière, par exemple du feu de recul ;
γ) détecter, par un système de gestion du véhicule relié au feu arrière par un faisceau de câbles incluant un premier câble connecté au premier conducteur, la modification dudit paramètre, via le premier câble.

Puisque le paramètre est modifié en fonction de la distance d, la détection de la modification du paramètre induit la détection de la distance d. Ce procédé permet en particulier l'aide à la manoeuvre en marche arrière, notamment pour un véhicule lourd.

Par exemple, l'étape β) comprend l'activation et la désactivation successives, par l'unité de commande, d'un dispositif d'indication agencé dans le feu arrière, selon une fréquence qui dépend de la donnée de distance. La fréquence d'activation / désactivation peut varier sensiblement continûment en fonction de la donnée de distance, de façon à communiquer au système de gestion une information la plus représentative possible de la distance en temps réel.

Selon une réalisation possible, l'étape β) comprend la génération d'impulsions de courant dans le premier conducteur, selon une fréquence qui dépend de la donnée de distance.

En outre, après l'étape γ), le procédé d'aide à la manoeuvre peut comprendre l'étape consistant à fournir une information représentative de la distance d et perceptible par un conducteur du véhicule. Il peut également comprendre, après l'étape γ), l'étape consistant à activer un dispositif de freinage du véhicule. Ceci peut typiquement se produire lorsque la modification du paramètre dépasse un seuil prédéterminé, ce qui signifie que la distance d est en-deçà d'un seuil prédéterminé.

Le procédé peut en outre comprendre la commande d'une alarme sonore de recul faisant partie du feu arrière du véhicule, ladite commande étant réalisée, en fonction de ladite donnée de distance, par l'unité de commande.

Ainsi, grâce à l'invention, on a un procédé de pilotage d'une alarme sonore de recul faisant partie d'un feu arrière de véhicule qui comporte en outre un feu de recul, le procédé comprenant les étapes consistant à :
a) recevoir une donnée de distance depuis un capteur de distance ;
b) commander le fonctionnement de l'alarme sonore de recul en fonction de ladite donnée de distance ;

les étapes a) et b) étant réalisées par une unité de commande agencée dans le feu arrière.

Par exemple, l'étape b) comprend l'alimentation de l'alarme sonore de recul par un courant comportant des impulsions dont la fréquence dépend de la donnée de distance.

On peut prévoir que, lorsque d1 > d > d2, la fréquence des impulsions est égale à une valeur fixe F1, et en ce que, lorsque d2 > d > d3, la fréquence des impulsions est égale à une valeur fixe F2 > F1, d1, d2 et d3 étant trois valeurs de distance.

En outre, le procédé de pilotage peut comprendre, avant l'étape a), l'étape consistant à détecter, par l'unité de commande, l'activation du feu de recul, puis à activer la mesure d'une donnée de distance par le capteur de distance.

On décrit à présent, à titre d'exemple non limitatif, un mode de réalisation possible de l'invention, en référence aux figures annexées :
La figure 1 est une vue schématique en perspective, de dessous, d'un véhicule selon l'invention ;
La figure 2 est une représentation schématique d'un véhicule comportant un feu arrière et un système d'aide à la manoeuvre selon l'invention.

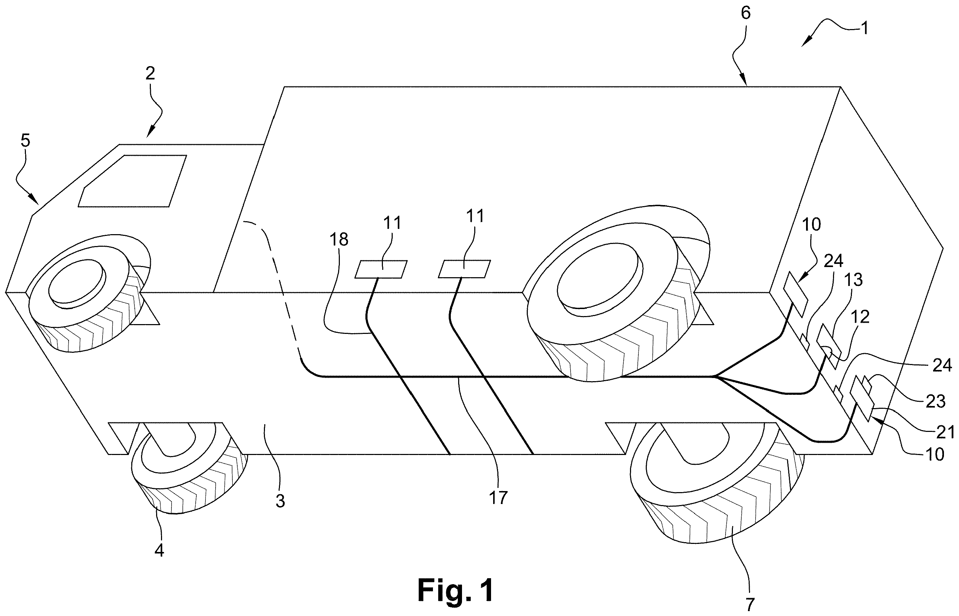

La figure 1 représente un véhicule 1 qui est ici un camion. Le véhicule 1 comprend, à l'avant, une partie motrice 2 pourvue d'un châssis 3, de roues avant 4 et d'une cabine 5. A l'arrière, le véhicule 1 comprend un conteneur 6 destiné à recevoir des marchandises, pourvu de roues arrière 7. Dans la réalisation représentée, le camion est un porteur, c'est-à-dire qu'il possède sur un seul et même châssis 3 la cabine 5 et le conteneur 6.

L'invention trouve néanmoins son application avec d'autres types de véhicules, et notamment de véhicules lourds. En particulier, l'invention s'applique également aux véhicules tracteurs, c'est-à-dire comprenant d'une part une partie motrice comportant la cabine et un châssis, et d'autre part un conteneur sous la forme d'une semi-remorque qui est chargée des marchandises et qui est attelée à la partie motrice. Dans ce cas, la semi-remorque est mécaniquement accrochée au châssis de la partie motrice, typiquement de façon articulée, et électriquement reliée à la partie motrice.

Une liaison électrique est prévue entre la partie motrice 2 et le conteneur 6, pour acheminer vers différents organes de signalisation du véhicule 1 les signaux de courant appropriés qui proviennent de la partie motrice 2. Ces signaux de courant peuvent servir à la fois à l'alimentation, à la commande et à la surveillance des différents organes de signalisation.

Les fonctions de signalisation réglementaires sur un conteneur de véhicule lourd peuvent comprendre : des feux arrière 10, des feux de position latéraux 11, une source lumineuse 12 d'éclairage de la plaque d'immatriculation 13, ainsi que d'autres organes non représentés, comme : des feux d'encombrement avant, des feux d'encombrement arrière, etc.

La liaison électrique entre la partie motrice 2 et le conteneur 6 comprend un faisceau de câbles 17, pouvant être installé sous le plancher du conteneur 6, qui est relié, à l'avant, à la partie motrice et, à l'arrière, aux différentes fonctions de signalisation du véhicule 1 via d'éventuels câbles additionnels 18.

Dans le cas d'un véhicule tracteur (non représenté), la liaison électrique entre la partie motrice et la semi-remorque peut comprendre une ou plusieurs prises fixées sur la partie arrière de la partie motrice, et une ou plusieurs prises fixées sur la partie avant de la semi-remorque, ces prises étant reliées, par exemple au moyen d'un cordon extensible. Un faisceau de câbles, pouvant être installé sous le plancher de la semi-remorque, permet de relier les prises fixées sur la partie avant de la semi-remorque aux différentes fonctions de signalisation du véhicule via d'éventuels câbles additionnels.

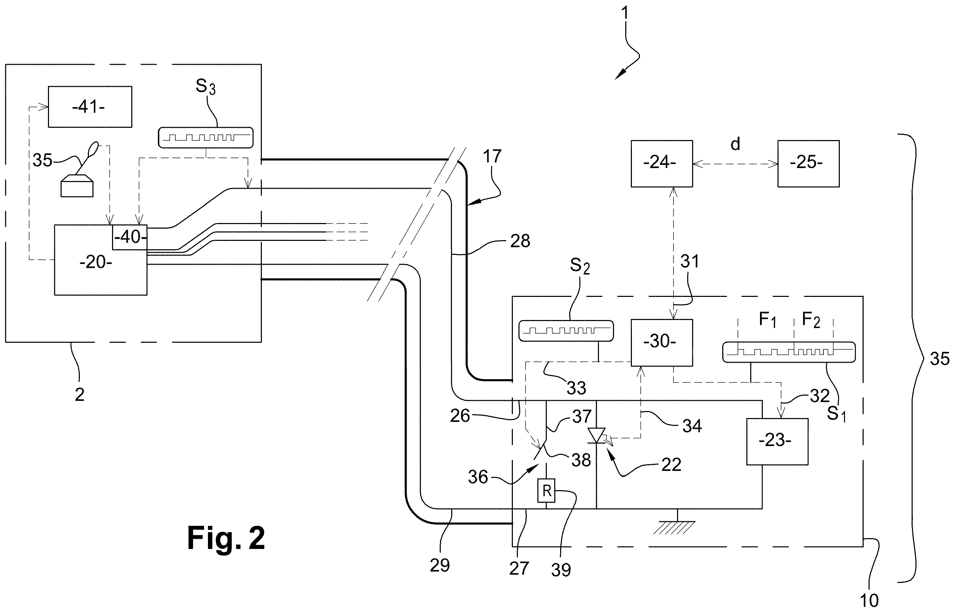

Le véhicule 1 comprend de plus un système de gestion 20 qui permet de gérer de façon globale le fonctionnement de divers dispositifs du véhicule. Ce système de gestion 20, situé dans la partie motrice 2, est relié au faisceau 17 (voir figure 2).

Le véhicule 1 comporte en outre au moins un capteur de distance 24, généralement monté à l'arrière du conteneur 6, apte à déterminer la distance d le séparant d'un élément environnant 25, comme schématisé sur la figure 2.

Le feu arrière 10 comprend un boîtier 21 contenant une pluralité de sources lumineuses, dont un feu de recul 22. D'autres sources lumineuses, non représentées, peuvent être : un indicateur de direction, un feu stop, un feu de brouillard, un feu de position. Dans certains modes de réalisation, le feu arrière 10 peut également comprendre une alarme sonore de recul 23 qui est associée au boîtier 21, par exemple en étant montée sur le boîtier 21, à l'extérieur de celui-ci, comme illustré schématiquement sur la figure 1.

On se réfère à présent plus précisément à la figure 2.

Le feu arrière 10 comprend un circuit électrique d'alimentation des sources lumineuses, et en particulier un circuit électrique d'alimentation du feu de recul 22 et de l'alarme sonore de recul 23 - lorsqu'elle est présente - comprenant un premier conducteur 26, qui constitue l'alimentation positive, et un deuxième conducteur 27, qui constitue un conducteur de masse. Le feu de recul 22 et l'alarme sonore de recul 23, le cas échéant, sont montés en parallèle entre le premier conducteur 26 et le conducteur de masse 27. De façon similaire, chaque source lumineuse est montée entre un premier conducteur dédié et le conducteur de masse 27.

Le faisceau 17 comprend N premiers câbles connectés chacun à un premier conducteur dédié à une source lumineuse du feu arrière, dont un premier câble 28 connecté au premier conducteur 26 dédié au feu de recul 22. Le faisceau 17 comprend de plus un deuxième câble 29 constituant un câble de masse connecté au conducteur de masse 27. La connexion entre les câbles 28, 29 et les conducteurs 26, 27 est réalisée au moyen de connecteurs appropriés non représentés. Dans certains cas, il pourrait être prévu un conducteur pour piloter séparément l'alarme sonore de recul 23 depuis la cabine 5.

Le feu arrière 10 comprend une unité de commande 30 logée dans le boîtier 21 qui permet de gérer un certain nombre de fonctionnalités du feu arrière 10 sans nécessiter de liaison supplémentaire dédiée avec le système de gestion 20 global du véhicule 1.

A cet effet, le feu arrière 10 est pourvu de moyens de détection 34, par l'unité de commande 30, de l'activation du feu de recul 22, qui sont représentés de façon schématique sur la figure 2. Par ces moyens de détection 34, l'unité de commande 30 surveille la tension des alimentations provenant de la partie motrice 2. Si la tension entre le premier conducteur 26 et le conducteur de masse 27 dépasse 24 V, cela signifie que le feu de recul 22 est activé.

En outre, le feu arrière 10 comprend des premiers moyens de liaison 31 agencés pour permettre à l'unité de commande 30 de communiquer avec le capteur de distance 24. L'unité de commande 30, qui est donc connectée au capteur de distance 24 par une première liaison, peut ainsi :
- alimenter le capteur de distance 24 ;
- lui envoyer des informations, et en particulier commander l'activation du capteur de distance 24 c'est-à-dire activer la prise de mesure par ce capteur de distance 24 ;
- et recevoir des informations depuis le capteur de distance 24, plus précisément une donnée correspondant à la distance d séparant le capteur de distance 24 d'un élément environnant 25.

Selon une réalisation possible, le feu arrière 10 peut également comprendre des seconds moyens de liaison 32 qui connectent l'unité de commande 30 et l'alarme sonore de recul 23. Par ces seconds moyens de liaison 32, l'unité de commande 30 peut commander l'alarme sonore de recul 23 en fonction de ladite donnée de distance d.

L'unité de commande 30 agencée dans le feu arrière 10 pilote donc le capteur de distance 24, et elle peut également commander l'alarme sonore de recul 23, lorsqu'elle est présente.

De façon concrète, l'unité de commande 30 détecte, par les moyens de détection 34, l'activation du feu de recul 22. En effet, lorsque le conducteur du véhicule passe la marche arrière, au moyen du levier de vitesses 35, le système de gestion 30 alimente le feu de recul 22 via le faisceau 17. Puis l'unité de commande 30 active la prise de mesure par le capteur de distance 24, par les premiers moyens de liaison 31.

L'unité de commande 30 reçoit ainsi, depuis le capteur de distance 24 et par les premiers moyens de liaison 31, une donnée correspondant à la distance d. Plus précisément, l'unité de commande 30 reçoit une donnée correspondant à la distance d à des instants successifs, par exemple espacés dans le temps d'une durée prédéfinie, de façon que l'unité de commande 30 puisse connaître la distance d à un instant donné, et l'évolution de la distance d dans le temps, typiquement lorsque le véhicule 1 se rapproche de l'élément environnant 25.

L'unité de commande 30 peut ainsi commander le fonctionnement de l'alarme sonore de recul 23, en fonction de la distance d, par les seconds moyens de liaison 32. A cet effet, l'unité de commande 30 pilote l'alimentation de l'alarme sonore de recul 23 par un signal de courant S1 comportant des impulsions dont la fréquence dépend de la donnée de distance d. Typiquement, on peut prévoir que, lorsque la distance d diminue, les impulsions du signal S1 sont de plus en plus rapprochées, c'est-à-dire que la fréquence augmente.

Selon un mode de réalisation possible, la fréquence des impulsions du signal S1 ne varie pas continument en fonction de la distance d, mais par paliers. Ainsi, comme illustré schématiquement sur la figure 2, on peut prévoir que, lorsque le véhicule se rapproche d'un élément environnant 25, c'est-à-dire lorsque la distance d diminue, en partant d'une valeur d :
- lorsque d1 > d > d2, la fréquence des impulsions est égale à une valeur fixe F1 ;
- lorsque d2 > d > d3, la fréquence des impulsions est égale à une valeur fixe F2 > F1 ;
- et ainsi de suite, par exemple jusqu'à l'émission d'un son sensiblement continu indiquant une très grande proximité de l'élément environnant 25.

Le feu arrière 10 et le capteur de distance 24 font ainsi partie d'un dispositif de signalisation 35 du recul d'un véhicule 1. Cette signalisation est à destination d'un autre usager, ou d'un piéton, mais également du conducteur du véhicule 1. En effet, comme exposé ci-après, l'unité de commande 30 est conçue pour permettre de renvoyer l'information correspondant à la distance d vers la partie motrice 2, plus précisément vers le système de gestion 20 et, finalement, vers la cabine 5 à destination du conducteur du véhicule 1.

A cet effet, le feu arrière 10 comprend un dispositif d'indication 36 connecté à l'unité de commande 3 par des troisièmes moyens de liaison 33 qui sont agencés pour permettre à l'unité de commande 30 d'activer ou de désactiver le dispositif d'indication 36.

Dans la réalisation représentée, le dispositif d'indication 36 comprend une disposée en parallèle du feu de recul 22 entre le premier conducteur 26 et le conducteur de masse 27. Cette branche électrique 37 comporte un interrupteur 38 et une résistance 39, ou plus généralement un composant apte à dissiper de la puissance. L'interrupteur 38 est connecté à l'unité de commande 30 par les troisièmes moyens de liaison 33. Ainsi, l'unité de commande 30 peut piloter la fermeture, respectivement l'ouverture, de l'interrupteur 38, c'est-à-dire l'activation, respectivement la désactivation, du dispositif d'indication 36.

Lorsque le dispositif d'indication 36 est activé, c'est-à-dire lorsque l'interrupteur 38 est fermé, le dispositif d'indication 36 permet de modifier l'intensité du courant I dans le premier conducteur 26, et donc dans le premier câble 28, en augmentant la valeur de cette intensité I. En variante, le dispositif d'indication 36 pourrait être situé entre le conducteur de masse 27 et un premier conducteur dédié à une autre source lumineuse du feu arrière 10, et permettre de modifier l'intensité du courant I dans ce premier conducteur.

Or, le système de gestion 20, relié au feu arrière 10 par le faisceau 17, comporte un dispositif de détection 40 qui permet de surveiller le bon fonctionnement des différentes sources lumineuses du feu arrière 10, en surveillant les intensités dans les différents premiers câbles connectés chacun à un premier conducteur dédié à une source lumineuse du feu arrière 10. Ainsi, le dispositif de détection 40 du système de gestion 20 est apte à détecter l'augmentation de l'intensité I résultant de l'activation du dispositif d'indication 36.

En pratique, comme indiqué précédemment, l'enclenchement de la marche arrière est détecté par l'unité de commande 30 grâce aux moyens de détection 34, et entraîne la réception, par l'unité de commande 30, de données fournies par le capteur de distance 24, via les premiers moyens de liaison 31, qui correspondent à la distance d.

L'unité de commande 30 pilote alors l'activation et la désactivation successives du dispositif d'indication 36, c'est-à-dire la fermeture et l'ouverture successives de l'interrupteur 38, selon un signal S2 comportant des impulsions dont la fréquence F dépend de la donnée de distance d.

Il s'ensuit que l'intensité I du courant dans le premier câble 28 forme un signal S3 similaire au signal S2, c'est-à-dire comportant des impulsions dont la fréquence F dépend de la donnée de distance d. Ce signal S3 étant détecté par le dispositif de détection 40 du système de gestion 20 comme précédemment expliqué, le système de gestion 20 reçoit ainsi, par le premier câble 28 du faisceau 17, une information correspondant à la distance d séparant le capteur de distance 24 - c'est-à-dire le véhicule 1 - d'un élément environnant 25.

On peut prévoir que la fréquence F varie sensiblement continûment en fonction de la donnée de distance d, ce qui permet d'avoir une information précise et quasiment en temps réel de la distance d.

Avantageusement, il peut être prévu dans la cabine 5 une interface 41 reliée au système de gestion 20 et apte à fournir une information représentative de la distance d, obtenue grâce au signal S3, et perceptible par le conducteur du véhicule 1. Il peut par exemple s'agir d'un indicateur sonore émettant des sons de plus en plus rapprochés à mesure que la distance d diminue, de façon similaire aux sons émis par l'alarme sonore de recul 23, lorsqu'elle est présente. En variante ou en complément, il peut s'agir d'un message affiché sur un écran situé par exemple sur le tableau de bord.

Le véhicule 1 est ainsi équipé d'un système d'aide à la manoeuvre, en particulier à la manoeuvre en marche arrière.

De façon optionnelle, il peut en outre être prévu l'activation d'un dispositif de freinage du véhicule 1, en particulier lorsque la distance d passe en-deçà d'une valeur seuil prédéterminée.

Ainsi, l'invention apporte une amélioration déterminante à la technique antérieure, en fournissant un feu arrière autonome et pourvu de sa propre unité de commande, qui permet :
- d'une part, de piloter le capteur de distance et, le cas échéant, l'alarme sonore de recul sans l'intervention du système de gestion global du véhicule ;
- et d'autre part de permettre de remonter l'information de la distance d au conducteur, par la génération d'impulsions détectables par le système de gestion ne nécessitant pas de modifications lourdes.

De ce fait, grâce à l'invention, il n'est pas nécessaire de modifier l'architecture du système de gestion, un simple complément devant être apporté au logiciel de ce système de gestion.

Il n'est pas non plus nécessaire de modifier l'architecture du véhicule puisque l'invention permet de tirer parti des câbles déjà existant dans le faisceau. Ainsi, en particulier, le faisceau est dépourvu de câble supplémentaire destiné à transmettre au système de gestion une information représentative de la distance d, par exemple reliant le système de gestion et le capteur de distance.

Il va de soi que l'invention n'est pas limitée au mode de réalisation décrit ci-dessus à titre d'exemple mais qu'elle comprend les variantes des moyens décrits ainsi que leurs combinaisons.

## Revendications

1. Feu arrière de véhicule (1), comprenant :
- au moins une source lumineuse, sous forme d'un feu de recul (22) disposé dans un boîtier (21) ;
- une unité de commande (30) logée dans le boîtier (21) ;
- des moyens de détection (34), par l'unité de commande (30), de l'activation du feu de recul (22) ;
- des premiers moyens de liaison (31) agencés pour permettre à l'unité de commande (30) de recevoir, depuis un capteur de distance (24), une donnée de distance d ;
**caractérisé en ce qu'**il comprend en outre :
- une pluralité de sources lumineuses disposées dans le boîtier (21);
- un circuit électrique d'alimentation des sources lumineuses comprenant :
- N premiers conducteurs dédiés chacun à l'une des sources lumineuses, dont un premier conducteur (26) dédié au feu de recul (22) ;
- et un deuxième conducteur (27), qui constitue un conducteur de masse ;
- un dispositif d'indication (36) connecté à l'unité de commande (30) par des troisièmes moyens de liaison (33) qui sont agencés pour permettre à l'unité de commande (30) d'activer ou de désactiver le dispositif d'indication (36), le dispositif d'indication (36), lorsqu'il est activé, étant apte à modifier au moins un paramètre du courant dans l'un des N premiers conducteurs (26).

2. Feu arrière selon la revendication 1, **caractérisé en ce que** le dispositif d'indication (36) comprend une branche électrique (37) disposée entre le premier conducteur (26) et le conducteur de masse (27), ladite branche électrique (37) comportant un interrupteur (38) et un composant (39) apte à dissiper de la puissance, tel qu'une résistance, les troisièmes moyens de liaison (33) connectant l'unité de commande (30) à l'interrupteur (38).

3. Feu arrière selon la revendication 1 ou 2, **caractérisé en ce qu'**il comprend en outre une alarme sonore de recul (23) associée au boîtier (21), et des seconds moyens de liaison (32) connectant l'unité de commande (30) et l'alarme sonore de recul (23), agencés pour permettre à l'unité de commande (30) de commander l'alarme sonore de recul (23) en fonction de ladite donnée de distance d.

4. Dispositif de signalisation du recul d'un véhicule (1), **caractérisé en ce qu'**il comprend un feu arrière (10) selon l'une des revendications 1 à 3, et au moins un capteur de distance (24) connecté à l'unité de commande (30), le capteur de distance (24) étant apte à déterminer la distance d le séparant d'un élément environnant (25).

5. Système d'aide à la manoeuvre d'un véhicule (1), **caractérisé en ce qu'**il comprend :
- un feu arrière (10) selon l'une des revendications 1 à 3 ;
- au moins un capteur de distance (24) connecté à l'unité de commande (30), le capteur de distance (24) étant apte à déterminer la distance d le séparant d'un élément environnant (25) ;
- un système de gestion (20) du véhicule (1) relié au feu arrière (10) par un faisceau (17) de câbles incluant N premiers câbles connectés chacun à un premier conducteur dédié à une source lumineuse du feu arrière (10), dont un premier câble (28) connecté au premier conducteur (26) dédié au feu de recul (22), et un deuxième câble (29), constituant un câble de masse, connecté au deuxième conducteur (27), le système de gestion (20) comportant un dispositif de détection (40) apte à détecter ledit au moins un paramètre du courant dans l'un des N premiers conducteurs (26), via le premier câble (28) correspondant.

6. Système selon la revendication 5, **caractérisé en ce qu'**il comprend une interface (41) reliée au système de gestion (20), apte à fournir une information représentative de la distance d et perceptible par un conducteur du véhicule (1).

7. Système selon la revendication 5 ou 6, **caractérisé en ce que** le faisceau (17) est dépourvu de câble supplémentaire destiné à transmettre au système de gestion (20) une information représentative de la distance d.

8. Véhicule, en particulier véhicule lourd tel qu'un camion tracteur ou porteur, comprenant (i) à l'avant, une partie motrice (2) comportant une cabine (5) et (ii) à l'arrière, un conteneur (6) destiné à recevoir des marchandises, **caractérisé en ce qu'**il comprend en outre un système d'aide à la manoeuvre selon l'une des revendications 5 à 7, le feu arrière (10) et au moins un capteur de distance (24) étant montés à l'arrière du conteneur (6), le système de gestion (20) et l'interface (41), lorsqu'elle est présente, étant situés dans la partie motrice (2).

9. Procédé d'aide à la manoeuvre d'un véhicule (1) par un conducteur, le véhicule (1) comprenant un feu arrière (10) comportant une pluralité de sources lumineuses parmi lesquelles un feu de recul (22), le procédé comprenant l'étape consistant à :
α) recevoir, dans une unité de commande (30) agencée dans le feu arrière (10), une donnée de distance depuis un capteur de distance (24) ;
**caractérisé en ce que** le procédé comprend en outre les étapes consistant à :
β) commander, par l'unité de commande (30) et en fonction de la donnée de distance, la modification d'au moins un paramètre du courant dans un premier conducteur (26) d'alimentation de l'une des sources lumineuses du feu arrière (10) ;
γ) détecter, par un système de gestion (20) du véhicule (1) relié au feu arrière (10) par un faisceau (17) de câbles incluant un premier câble (28) connecté au premier conducteur (26), la modification dudit paramètre, via le premier câble (28).

10. Procédé d'aide à la manoeuvre selon la revendication 9, **caractérisé en ce que** l'étape β) comprend l'activation et la désactivation successives, par l'unité de commande (30), d'un dispositif d'indication (36) agencé dans le feu arrière (10), selon une fréquence qui dépend de la donnée de distance.

11. Procédé d'aide à la manoeuvre selon la revendication 10, **caractérisé en ce que** la fréquence d'activation / désactivation varie sensiblement continûment en fonction de la donnée de distance.

12. Procédé d'aide à la manoeuvre selon l'une des revendications 9 à 11, **caractérisé en ce que** l'étape β) comprend la génération d'impulsions de courant dans le premier conducteur (26), selon une fréquence qui dépend de la donnée de distance.

13. Procédé d'aide à la manoeuvre selon l'une des revendications 9 à 12, **caractérisé en ce qu'**il comprend en outre, après l'étape γ), l'étape consistant à fournir une information représentative de la distance d et perceptible par un conducteur du véhicule.

14. Procédé d'aide à la manoeuvre selon l'une des revendications 9 à 13, **caractérisé en ce qu'**il comprend en outre, après l'étape γ), l'étape consistant à activer un dispositif de freinage du véhicule (1).

15. Procédé d'aide à la manoeuvre selon l'une des revendications 9 à 14, **caractérisé en ce qu'**il comprend en outre la commande d'une alarme sonore de recul faisant partie du feu arrière (10) du véhicule (1), ladite commande étant réalisée, en fonction de ladite donnée de distance, par l'unité de commande (30).

## Patentansprüche

1. Rückleuchte für ein Fahrzeug (1), umfassend:
- mindestens eine Lichtquelle in Form einer Rückfahrleuchte (22), die in einem Gehäuse (21) angeordnet ist;
- eine Steuereinheit (30), die im Gehäuse (21) untergebracht ist;
- Mittel zum Detektieren (34), durch die Steuereinheit (30), der Aktivierung der Rückfahrleuchte (22);
- erste Anschlussmittel (31), die dafür eingerichtet sind, der Steuereinheit (30) zu ermöglichen, Abstandsdaten d von einem Abstandssensor (24) zu empfangen;
**dadurch gekennzeichnet, dass** sie weiter umfasst:
- eine Vielzahl von Lichtquellen, die im Gehäuse (21) angeordnet sind;
- einen elektrischen Kreis zum Versorgen der Lichtquellen, umfassend:
-- N erste Leiter, die jeder einer der Lichtquellen vorbehalten sind, darunter ein erster Leiter (26), der der Rückfahrleuchte (22) vorbehalten ist;
-- und einen zweiten Leiter (27), der einen Masseleiter darstellt;
- eine Anzeigevorrichtung (36), die mit der Steuereinheit (30) verbunden ist über dritte Anschlussmittel (33), welche dafür eingerichtet sind, der Steuereinheit (30) zu ermöglichen, die Anzeigevorrichtung (36) zu aktivieren oder zu deaktivieren, wobei die Anzeigevorrichtung (36), wenn sie aktiviert ist, in der Lage ist, mindestens einen Parameter des Stroms in einem der N ersten Leiter (26) zu modifizieren.

2. Rückleuchte nach Anspruch 1, **dadurch gekennzeichnet, dass** die Anzeigevorrichtung (36) eine elektrische Schaltung (37) umfasst, die zwischen dem ersten Leiter (26) und dem Masseleiter (27) angeordnet ist, wobei die elektrische Schaltung (37) einen Schalter (38) und ein Bauteil (39) wie etwa einen Widerstand umfasst, das dazu in der Lage ist, Leistung abzuführen, wobei die dritten Anschlussmittel (33) die Steuereinheit (30) mit dem Schalter (38) verbinden.

3. Rückleuchte nach Anspruch 1 oder 2, **dadurch gekennzeichnet, dass** sie weiter einen akustischen Rückfahralarm (23) umfasst, der mit dem Gehäuse (21) assoziiert ist, und zweite Anschlussmittel (32), die die Steuereinheit (30) und den akustischen Rückfahralarm (23) verbinden, die dafür eingerichtet sind, der Steuereinheit (30) zu ermöglichen, den akustischen Rückfahralarm (23) in Abhängigkeit von den Abstandsdaten d zu steuern.

4. Vorrichtung zum Signalisieren der Rückwärtsfahrt eines Fahrzeugs (1), **dadurch gekennzeichnet, dass** sie eine Rückleuchte (10) nach einem der Ansprüche 1 bis 3, und mindestens einen Abstandssensor (24) umfasst, der mit der Steuereinheit (30) verbunden ist, wobei der Abstandssensor (24) in der Lage ist, den Abstand d, der ihn von einem Umgebungselement (25) trennt, zu bestimmen.

5. System zur Lenkassistenz eines Fahrzeugs (1), **dadurch gekennzeichnet, dass** es umfasst:
- eine Rückleuchte (10) nach einem der Ansprüche 1 bis 3;
- mindestens einen Abstandssensor (24), der mit der Steuereinheit (30) verbunden ist, wobei der Abstandssensor (24) in der Lage ist, den Abstand d, der ihn von einem Umgebungselement (25) trennt, zu bestimmen;
- ein System zur Verwaltung (20) des Fahrzeugs (1), das an die Rückleuchte (10) angeschlossen ist über einen Kabelbaum (17), der N erste Kabel einschließt, die jedes mit einem ersten Leiter verbunden sind, der einer Lichtquelle der Rückleuchte (10) vorbehalten ist, darunter ein erstes Kabel (28), das mit dem ersten Leiter (26) verbunden ist, der der Rückfahrleuchte (22) vorbehalten ist, und ein zweites Kabel (29), das ein Massekabel darstellt, das mit dem zweiten Leiter (27) verbunden ist, wobei das Verwaltungssystem (20) eine Detektionsvorrichtung (40) umfasst, die in der Lage ist, den mindestens einen Parameter des Stroms in einem der N ersten Leiter (26) über das entsprechende erste Kabel (28) zu detektieren.

6. System nach Anspruch 5, **dadurch gekennzeichnet, dass** es eine an das Verwaltungssystem (20) angeschlossene Schnittstelle (41) umfasst, die in der Lage ist, eine Information zu liefern, welche für den Abstand d repräsentativ und für einen Fahrer des Fahrzeugs (1) wahrnehmbar ist.

7. System nach Anspruch 5 oder 6, **dadurch gekennzeichnet, dass** der Baum (17) mit keinem zusätzlichen Kabel versehen ist, das dazu bestimmt ist, eine Information, die für den Abstand d repräsentativ ist, an das Verwaltungssystem (20) zu übertragen.

8. Fahrzeug, insbesondere Schwerfahrzeug wie etwa ein Lastzug oder Lastkraftwagen, der (i) vorne einen Antriebsteil (2), der eine Kabine (5) umfasst, und (ii) hinten einen Frachtraum (6) umfasst, der dazu bestimmt ist, Güter aufzunehmen, **dadurch gekennzeichnet, dass** es weiter ein Lenkassistenzsystem nach einem der Ansprüche 5 bis 7 umfasst, wobei die Rückleuchte (10) und mindestens ein Abstandssensor (24) hinten am Frachtraum (6) montiert sind, wobei sich das Verwaltungssystem (20) und die Schnittstelle (41), wenn sie vorhanden ist, im Antriebsteil (2) befinden.

9. Verfahren zur Assistenz beim Lenken eines Fahrzeugs (1) durch einen Fahrer, wobei das Fahrzeug (1) eine Rückleuchte (10) umfasst, die eine Vielzahl von Lichtquellen umfasst, darunter eine Rückfahrleuchte (22), wobei das Verfahren den Schritt umfasst des:
α) Empfangens, in einer Steuereinheit (30), die in der Rückleuchte (10) eingerichtet ist, von Abstandsdaten von einem Abstandssensor (24);
**dadurch gekennzeichnet, dass** das Verfahren weiter die Schritte umfasst des:
β) Steuerns, durch die Steuereinheit (30) und in Abhängigkeit von den Abstandsdaten, der Modifizierung von mindestens einem Parameter des Stroms in einem ersten Leiter (26) zum Versorgen einer der Lichtquellen der Rückleuchte (10);
γ) Detektierens, durch ein Verwaltungssystem (20) des Fahrzeugs (1), das über einen Kabelbaum (17), der ein mit dem ersten Leiter (26) verbundenes erstes Kabel (28) einschließt, an die Rückleuchte (10) angeschlossen ist, der Modifikation des Parameters über das erste Kabel (28).

10. Lenkassistenzverfahren nach Anspruch 9, **dadurch gekennzeichnet, dass** der Schritt β) die aufeinanderfolgende Aktivierung und Deaktivierung, durch die Steuereinheit (30), einer in der Rückleuchte (10) eingerichteten Anzeigevorrichtung (36) gemäß einer Frequenz umfasst, die von den Abstandsdaten abhängt.

11. Lenkassistenzverfahren nach Anspruch 10, **dadurch gekennzeichnet, dass** die Aktivierungs-/Deaktivierungsfrequenz im Wesentlichen kontinuierlich in Abhängigkeit von den Abstandsdaten variiert.

12. Lenkassistenzverfahren nach einem der Ansprüche 9 bis 11, **dadurch gekennzeichnet, dass** der Schritt β) das Erzeugen von Stromimpulsen im ersten Leiter (26) gemäß einer Frequenz umfasst, die von den Abstandsdaten abhängt.

13. Lenkassistenzverfahren nach einem der Ansprüche 9 bis 12, **dadurch gekennzeichnet, dass** es nach dem Schritt γ) weiter den Schritt des Lieferns einer Information umfasst, die für den Abstand d repräsentativ und für einen Fahrer des Fahrzeugs wahrnehmbar ist.

14. Lenkassistenzverfahren nach einem der Ansprüche 9 bis 13, **dadurch gekennzeichnet, dass** es nach dem Schritt γ) weiter den Schritt des Aktivierens einer Bremsvorrichtung des Fahrzeugs (1) umfasst.

15. Lenkassistenzverfahren nach einem der Ansprüche 9 bis 14, **dadurch gekennzeichnet, dass** es weiter das Steuern eines akustischen Rückfahralarms umfasst, der zur Rückleuchte (10) des Fahrzeugs (1) gehört, wobei die Steuerung von der Steuereinheit (30) in Abhängigkeit von den Abstandsdaten ausgeführt wird.

## Claims

1. A vehicle tail light (1), comprising:
- at least one light source, in the form of a reverse light (22) disposed in a case (21);
- a controller (30) housed in the case (21);
- means (34) for detection, by the controller (30), of the activation of the reverse light (22);
- first connection means (31) arranged to enable the controller (30) to receive, from a distance sensor (24), a distance datum d;
**characterized in that** it further comprises:
- a plurality of light sources disposed in the case (21);
- an electric circuit for powering the light sources comprising:
• N first conductors each dedicated to one of the light sources, including a first conductor (26) dedicated to the reverse light (22);
• and a second conductor (27), which constitutes a ground conductor;
- an indication device (36) connected to the controller (30) by third connection means (33) which are arranged to enable the controller (30) to activate or deactivate the indication device (36), the indication device (36) being able, when activated, to modify at least one parameter of the current in any of the N first conductors (26).

2. The tail light according to claim 1, **characterized in that** the indication device (36) comprises an electrical branch (37) disposed between the first conductor (26) and the ground conductor (27), said electrical branch (37) including a switch (38) and a component (39) adapted to dissipate power, such as a resistance, the third connection means (33) connecting the controller (30) to the switch (38).

3. The tail light according to claim 1 or 2, **characterized in that** it further comprises an audible reverse alarm (23) associated to the case (21), and second connection means (32) connecting the controller (30) and the audible reverse alarm (23), arranged to enable the controller (30) to control the audible reverse alarm (23) according to said distance datum d.

4. A device for signaling the backward motion of a vehicle (1), **characterized in that** it comprises a tail light (10) according to any of claims 1 to 3, and at least one distance sensor (24) connected to the controller (30), the distance sensor (24) being adapted to determine the distance d separating it from a surrounding element (25).

5. A control assist system of a vehicle (1), **characterized in that** it comprises:
- a tail light (10) according to any of claims 1 to 3;
- at least one distance sensor (24) connected to the controller (30), the distance sensor (24) being adapted to determine the distance d separating it from a surrounding element (25);
- a management system (20) of the vehicle (1) connected to the tail light (10) by a cable harness (17) including N first cables each connected to a first conductor dedicated to a light source of the tail light (10), including a first cable (28) connected to the first conductor (26) dedicated to the reverse light (22), and a second cable (29), constituting a ground cable, connected to the second conductor (27), the management system (20) including a detection device (40) adapted to detect said at least one parameter of the current in any of the N first conductors (26), via the corresponding first cable (28).

6. The system according to claim 5, **characterized in that** it comprises an interface (41) connected to the management system (20), adapted to supply information representative of the distance d and perceptible by a driver of the vehicle (1).

7. The system according to claim 5 or 6, **characterized in that** the harness (17) is devoid of any additional cable intended to transmit to the management system (20) information representative of the distance d.

8. A vehicle, in particular a heavy vehicle such as a tractor or carrier truck, comprising (i) at the front, a driving portion (2) including a cab (5) and (ii) at the rear, a container (6) intended to receive goods, **characterized in that** it further comprises a control assist system according to any of claims 5 to 7, the tail light (10) and at least one distance sensor (24) being mounted at the rear of the container (6), the management system (20) and the interface (41), when the latter is present, being located in the driving portion (2).

9. A control assist method of a vehicle (1) by a driver, the vehicle (1) comprising a tail light (10) including a plurality of light sources among which a reverse light (22), the method comprising the step consisting in:
α) receiving, in a controller (30) arranged in the tail light (10), a distance datum from a distance sensor (24);
**characterized in that** the method further comprises the steps consisting in:
β) controlling, by the controller (30) and according to the distance datum, the modification of at least one parameter of the current in the first power supply conductor (26) of any of the light sources of the tail light (10);
γ) detecting, by a management system (20) of the vehicle (1) connected to the tail light (10) by a cable harness (17) including a first cable (28) connected to the first conductor (26), the modification of said parameter, via the first cable (28).

10. The control assist method according to claim 9, **characterized in that** step β) comprises the successive activation and reactivation, by the controller (30), of an indication device (36) arranged in the tail light (10), according to a frequency which depends on the distance datum.

11. The control assist method according to claim 10, **characterized in that** the activation / deactivation frequency varies substantially continuously according to the distance datum.

12. The control assist method according to any of claims 9 to 11, **characterized in that** step β) comprises the generation of current pulses in the first conductor (26), according to a frequency which depends on the distance datum.

13. The control assist method according to any of claims 9 to 12, **characterized in that** it further comprises, after step γ), the step consisting in supplying information representative of the distance d and perceptible by a driver of the vehicle.

14. The control assist method according to any of claims 9 to 13, **characterized in that** it further comprises, after step γ), the step consisting in activating a braking device of the vehicle (1).

15. The control assist method according to any of claims 9 to 14, **characterized in that** it further comprises the control of an audible reverse alarm embedded in the tail light (10) of the vehicle (1), said control being carried out, according to said distance datum, by the controller (30).
